# EUROPÄISCHE PATENTANMELDUNG

(11) **EP 1 376 062 A2**
(43) Veröffentlichungstag der Anmeldung: **02.01.2004**
(21) Anmeldenummer: 03022388.7
(22) Anmeldetag: 11.11.1999
(51) Int. Cl.: G01C 21/34

(54) **Navigation mit Multimedia**

(30) Priorität: 16.11.1998 DE 19852659
(62) Teilanmeldung aus: 99972301.8
(71) Anmelder: ROBERT BOSCH GMBH, 70442 Stuttgart (DE)
(72) Erfinder: Duckeck, Ralf, 31134 Hildesheim (DE); Pilsak, Otmar, 31141 Hildesheim (DE)

(57) **Zusammenfassung**

Es wird ein Informationsträger vorgeschlagen, der multimediale Informationen über Objekte am Reiseweg oder Reiseziel für die Verwendung in einer Navigationsvorrichtung bereitstellt. Dabei kann die Darstellung in Abhängigkeit von der Position des Fahrzeuges auch automatisch erfolgen und durch Informationen ergänzt werden, die über Funk von einer Dienstezentrale abrufbar sind.

## Beschreibung

### Stand der Technik

Die Erfindung geht aus von einem Informationsträger nach der Gattung des Hauptanspruchs. Es ist schon ein Informationsträger bekannt, bei dem zusätzliche Informationen über Hotels, Restaurants, touristische Sehenswürdigkeiten usw. in Textform gespeichert sind und durch den Benutzer abgerufen und optisch angezeigt werden können (Bedienungsanleitung MERIAN scout, Redaktion MERIAN scout, Gräfe und Unzer Verlag GmbH, München). Informationen, die über die reine Textform hinausgehen, werden nicht bereitgestellt.

### Vorteile der Erfindung

Der erfindungsgemäße Informationsträger mit den Merkmalen des Hauptanspruchs hat demgegenüber den Vorteil, daß insbesondere zusätzlich zu den Textinformationen weitere Informationen in multimedialer Form, also in Form von Bildern, Bilderfolgen, Filmen, Ton- und Musikdokumenten bzw. in Mischungen dieser Formen auf dem Informationsträger abgelegt sind. Der Benutzer kann sich so weitaus umfassender über besondere Objekte am Reiseweg oder am Reiseziel informieren, ohne zusätzliches Material, wie z.B. einen Reiseführer, zu verwenden. Als besondere Objekte sind insbesondere Objekte mit touristischer Bedeutung zu nennen wie z.B. Hotels, Restaurants, Theater, Museen, Kirchen, Naturdenkmäler, besondere Gebäude wie Schlösser und Burgen, Parks, Bäder und Seen.

Weiterhin ist es von Vorteil, daß die Informationen zu den besonderen Objekten nach durch den Benutzer vorgebbaren Kriterien ausgebbar sind. So kann sich der Benutzer z.B. in einer Pause über Objekte informieren, die sich am weiteren Streckenverlauf befinden. Daß den Informationen zu den besonderen Objekten jeweils mindestens ein Oberbegriff zugeordnet ist, ermöglicht dabei die gezielte Suche. Ein Oberbegriff stellt dabei eine Kategorie wie z.B. "Hotel" oder "Museum" dar, der durch weitere Unterteilungen spezifiziert werden kann z.B. "Hotel", "2 Sterne"oder "Museum", "moderne Kunst". Für den Fall eines Fahrzeugdefekts z.B. kann es dem Benutzer ferner ermöglicht werden, sich über die Lage und das Erscheinungsbild der nächsten Werkstätten zu informieren.

Weiterhin ist es von Vorteil, daß die Informationen in Abhängigkeit von der Fahrzeugposition selbstätig ausgebbar sind. Dies entlastet durch den Wegfall des Suchaufwands den Benutzer, so daß sich insbesondere bei Musik- und Tondokumenten der Fahrer auch während der Fahrt informieren kann. Zusätzliche Informationen müssen nicht gesucht werden, so daß einerseits der Benutzer auch auf Objekte hingewiesen wird, die ihm vorher nicht bekannt waren. Indem der Benutzer andererseites einschränkende Kriterien wie z.B. die maximale Entfernung oder einen Oberbegriff wie z.B. "Hotel" vorgeben kann, kann er die Ausgabe auf für ihn wichtige Informationen beschränken.

Weiterhin ist es von Vorteil, daß auf dem Informationsträger Informationen zur Bedienung des Kraftfahrzeugs und seiner Komponenten abgelegt sind. Insbesondere können dies Hinweise für den Fall eines Fahrzeugdefekts sein, die bei dem entsprechendne Fehler automatisch aufgerufen werden.
Für die Ausgabe dieser Informationen kann die akustische und/oder optische Ausgabe der Navigationsvorrichtung, in die der Informationsträger eingelegt ist, mitgenutzt werden.

Von Vorteil ist ferner, daß von der Navigationsvorrichtung über Funk Informationen zu den besonderen Objekten nach vorgebbaren Kriterien abgerufen werden können. Über einen Downlinkkanal werden Informationen von der Dienstezentrale zu der Navigationsvorrichtung übertragen. Diese Daten können von der Dienstezentrale aktualisiert werden. Weiterhin wird kein Speicherplatz für die ständige Speicherung in der Navigationsvorrichtung benötigt.

Darüber hinaus ist es von Vorteil, daß die Navigationsvorrichtung über einen Uplinkkanal verfügt. Insbesondere über den Uplinkkanal ist die Datenanforderung von zusätzlichen und/oder aktualisierten Informationen möglich, die über den Downlinkkanal übermittelt werden. Diese Daten können insbesondere Grundlage für eine Änderung der ausgewählten Fahrstrecke aus einem aktuellen Anlaß sein. Auf dem Informationsträger können hierzu bereits Adressen, insbesondere Internet- bzw. WWW-Adressen, gespeichert sein.

Weiterhin ist es von Vorteil, daß über den Uplinkkanal eine Reservierung und über den Downlinkkanal eine Bestätigung dieser Reservierung erfolgen kann, weil so für den Benutzer z.B. direkt bei der Anzeige eines Objektes - also z.B. eines Restaurants oder eines Theaters - die Möglichkeit besteht, einen Tisch bzw. Eintrittskarten zu reservieren.

Weiterhin ist es von Vorteil, daß die über Funk abrufbaren Informationen mit auf einem Informationsträger gespeicherten Informationen in multimedialer Form ergänzt werden. Hierdurch läßt sich die Datenübertragung auf aktuelle Informationen - z.B. Belegungsstand eines Hotelsbeschränken, während speicherintensive Informationen auf dem Informationsträger vorliegen - z.B. ein Foto des Hotels.

Neben einer Vorrichtung zum Abspielen eines Informationsträgers, der insbesondere die reinen Navigationsdaten enthält, kann eine zweite Vorrichtung zum Abspielen eines Informationsträgers an das Navigationssystem angeschlossen werden, auf dem nur die zusätzlichen Informationen gespeichert sind. Dies bietet den Vorteil, mit beiden Informationsträgern ein größeres Kartengebiet abdecken zu können, für das Navigations- und zusätzliche Informationen bereitgestellt sind.

Weiterhin ist es vorteilhaft, daß die Tonausgabe über das Autoradio erfolgt, weil so eine zusätzliche Tonausgabe an dem Navigationssystem eingespart wird.

Die Realisierung des Uplink- und Downlinkkanals über eine GSM-Verbindung bzw. die Realisierung des Downlinkkanals über eine DAB-Verbindung bieten den Vorteil, daß ein im Fahrzeug möglicherweise vorhandenes mobiles Telefon, das über eine GSM-Verbindung verfügt, bzw. ein DAB-Empfänger durch das Navigationssystem mitgenutzt werden. Eine Mitbenutzung ist ebenfalls bei einem vorhandenen Bildtelefon möglich, falls der Uplink- und/oder Downlinkkanal durch eine Bildtelefonverbindung realisiert ist.

### Zeichnung

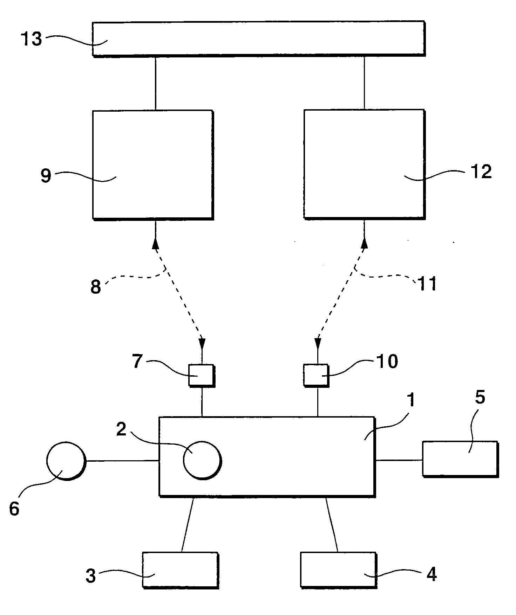

Ein Ausführungsbeispiel der Erfindung ist in der Zeichnung dargestellt und in der nachfolgenden Beschreibung näher erläutert. Die einzige Figur zeigt eine erfindungsgemäße Navigationsvorrichtung mit angeschlossenen Geräten und Funkverbindung über einen Uplink- und Downlinkkanal.

### Beschreibung des Ausführungsbeispiels

In der Figur ist eine erfindungsgemäße Navigationsvorrichtung 1 mit einem CD-Laufwerk 2 dargestellt. Nicht eingezeichnet sind die Verbindungen der Navigationsvorrichtung 1 zu Sensoren und einem GPS-Empfänger, die der Ortung dienen, sowie in der Navigationsvorrichtung vorhandene Rechner- und Speichereinheiten. Die Navigationsvorrichtung 1 ist an eine Audioausgabe 3 angeschlossen, wobei die Ausgabe entweder direkt oder über einen Audioausgang erfolgen kann. Vorzugsweise ist die Audioausgabe 3 durch ein Autoradio realisiert. Die Videoausgabe 4 ist entweder direkt oder über einen Videoausgang an die Navigationsvorrichtung 1 angeschlossen. Weiterhin sind Eingabevorrichtungen 5 für den Benutzer an die Navigationsvorrichtung 1 angeschlossen. Optional ist ein zusätzliches CD-Laufwerk 6 an die Navigationsvorrichtung 1 anschließbar. An die Navigationsvorrichtung ist weiterhin ein GSM-Sender und Empfänger 7 angeschlossen. Er dient dazu, über einen Uplinkkanal 8 Informationen an eine Dienstezentrale 9 weiterzugeben. Ferner ist es möglich, daß der Uplinkkanal 8 über GSM auch als Downlinkkanal von der Dienstzentrale an das Navigationssystem 1 über den GSM-Empfänger 7 fungiert. Weiterhin ist ein DAB-Empfänger 10 an das Navigationssystem 1 angeschlossen. Der Empfänger dient dazu, über einen Downlinkkanal 11 Informationen von einer Dienstezentrale 12 zu empfangen. Die Dienstezentralen 9 und 12 sind möglicherweise direkt miteinander verbunden; sie können auch identisch sein. Außerdem besteht die Möglichkeit, daß die Dienstezentralen 9 und 12 an eine Datennetz 13, z.B. das Internet, angeschlossen sind. Nicht eingezeichnet ist eine Verbindung der Dienstezentralen 9 und 12 sowie des Datennetzes 13 zu Rechnern, die zu den besonderen Objekten am Reiseweg, z.B. zu einem Hotel, gehören.

Die Informationen liegen in multimedialer Form, also in der Form von Bildern, Bilderfolgen, Filmen, Ton- bzw. Musikdokumenten oder in Form von Mischungen dieser Formen vor. Sie sind als Daten, vorzugsweise in der Form verschiedener Dateien, auf dem Informationsträger gespeichert. Dabei wird unter einer Bilderfolge in diesem Zusammenhang die Abfolge mehrerer Bilder verstanden, die das Auge im Gegensatz zu einem Film deutlich voneinander trennen kann. Der Informationsträger ist dabei vorzugsweise eine CD-ROM, möglich ist u.a. auch eine DVD oder ein Halbleiterbaustein.

Es sind Informationen zu der oben erläuterten Art von besonderen Objekten, insbesondere mit touristischer Bedeutung, abgelegt. Die Informationen sind jeweils mit einer Ortsinformation verknüpt. Das Navigationssystem kann nun in Abhängigkeit von der aktuellen Fahrzeugposition Informationen ausgeben, indem es die aktuelle Fahrzeugposition mit den gespeicherten Ortsinformationen vergleicht. Die Ortsinformation stellt dabei eine Position in einer digitalen Karte dar und kann durch einen Punkt, eine Linie bzw. einen Vektor oder eine Fläche auf dieser digitalen Karte repräsentiert sein, auf die die Navigationsvorrichtung zugreifen kann. Die Ortsinformation kann sich auf den wirklichen Punkt des Objektes beziehen oder auf eine Position an einer Straße, die dem Objekt zugeordnet werden soll. Z.B. eine Abzweigung zu einem Hotel oder eine Sehenswürdigkeit auf einer anderen Flußseite könnte mit einer solchen Position gekennzeichnet sein. Die Karteninformationen, vorzugsweise in Form einer digitalen Karte, können z.B. ebenfalls auf dem Datenträger, der sich im CD-Laufwerk 2 befindet, gespeichert sein. Dabei kann der Benutzer z.B. vorgeben, ob alle gespeicherten Informationen der Umgebung des Fahrzeugs, z.B. im Umkreis von 1 km, ausgegeben werden sollen oder ob Informationen der noch abzufahrenden gewünschten Fahrstrecke, z.B. die nächsten 3 km angezeigt werden sollen. Das Navigationssystem vergleicht diesen Bereich selbstätig mit der aktuellen Fahrzeugposition. Gelangen nun durch die Fahrzeugbewegung Objekte, zu denen Informationen vorliegen, in einen durch den Benutzer vorgegebenen Bereich, so gibt die Navigationsvorrichtung diese Informationen selbstätig aus. Ein weiteres mögliches Kriterium für die Auswahl sind Oberbegriffe von Objekten. Verschiedene Oberbegriffe können z.B. Hotels, Gasthäuser, Theater, Museen oder Kirchen sein. Ein solcher Oberbegriff kann zusätzlich zu jedem Objekt mit den Informationen auf dem Informationsträger abgelegt sein. So kann sich der Fahrer z.B. die Informationen zu allen Hotels oder allen Museen ausgeben lassen. Dieses Kriterium ist mit der Auswahl eines Ortsbereichs verknüpfbar, z.B. also alle Hotels in einem Umkreis von 10 km. Die Eingabe erfolgt ebenfalls über die Eingabevorrichtung 5.
Weiterhin können nach Aufforderung über die Eingabevorrichtung 5 die Informationen durch den Benutzer unabhängig von der Fahrzeugposition ausgegeben werden.
Die Ausgabe erfolgt über die Audioausgabe 3 und/oder über die Videoausgabe 4.

Es ist auch weiterhin möglich, ergänzend Informationen in multimedialer Form zur Fahrzeugbedienung auf dem Informationsträger abzulegen. Dabei kann es sich um eine Bedienungsanleitung des Navigationssystems selbst, weiterer Fahrzeugkomponenten wie des Autoradios, als auch des gesamten Fahrzeugs handeln. Insbesondere ist eine Hilfefunktion für den Ausfall von Systemkomponenten wie z.B. des ABS, des Generators oder der Ölversorgung möglich.
Dies wird im Falle eines Defekts automatisch angezeigt.

Weiterhin ist es möglich, zusätzliche bzw. aktualisierte Informationen von dem zusätzlichen CD-Laufwerk 6 oder über die Up- und Downlinkkanäle 8 und 11 von den Dienstzentralen 9 und 12 abzurufen. Diese Zentralen können wiederum über das Datennetz 13 zusätzliche Informationen bereitstellen. Über die Eingabevorrichtung 5 kann der Benutzer über das Navigationssystem und den Uplinkkanal 8 sowie über die Dienstezentrale 9 eine Reservierung für ein Objekt am Reiseziel vornehmen, z.B. eine Zimmerreservierung für ein Hotel.

Die Videoausgabe 4 kann über verschiedene Geräte erfolgen. Eine Möglichkeit ist, das Navigationssystem 1 an die Anzeige eines frei programmierbaren Kombiinstrumentes anzuschließen. Auf Anforderung des Benutzers erfolgt dann auf dem Display die Anzeige der Informationen. Weiterhin kann die Videoausgabe auch durch einen Bildschirm vorzugsweise in Fahrzeugmitte oder auch durch ein Head-Up Display realisiert sein, bei dem das Bild auf die Frontscheibe projeziert wird.

Die Eingabevorrichtung 5 kann in verschiedenen Gestaltungsformen ausgeführt sein, von denen eine oder mehrere dem Benutzer zur Verfügung stehen. Die Eingabe in das Navigationssystem 1 kann über eine Tastatur, über ein Mikrophon, das an eine Spracheingabeauswertung angeschlossen ist, oder über einen Bildschirm mit einer Menüauswahl erfolgen. Weiterhin ist es möglich, daß die Eingabeeinrichtung 5 über ein Mikrophon und eine Kamera eines Bildtelefones verfügt und hierüber über das Navigationssystem 1 und den Up- und Downlinkkanal 8 mit der Dienstezentrale 9 ein direkter Kontakt hergestellt werden kann.

Als Beispiel für die vielfältige Art, in der Informationen auf dem Informationsträger abgelegt sein können, wird eine Fahrt entlang des Mittelrheins gewählt. Historische Informationen zu den Burgen können z.B. als Tondokument ausgegeben werden; an der Lorelei kann das Loreleilied gespielt wird, für die Rheinschifffahrt können die Fahrpläne angezeigt und über den Uplinkkanal Fahrkarten reserviert werden. Ferner ist es über den Downlinkkanal möglich, aktuelle Informationen über Preise und Belegung der Hotels zu erfahren oder sich auch über das Gaststättenangebot zu informieren. Insbesondere für die Beifahrer können kurze Filme über die Orte gezeigt werden, die man passiert, um z.B. eine Entscheidung zu geben, ob ein Halt erfolgen soll. Indem das Navigationssystem ständig die aktuelle Position des Fahrzeuges ermittelt, werden dem Benutzer, falls die Automatik aktiviert ist, Informationen über die Objekte ausgegeben, die er gerade in seiner Umgebung sehen kann.

## Patentansprüche

1. Informationsträger, insbesondere eine CD-ROM, für eine Navigationsvorrichtung in einem Kraftfahrzeug, wobei auf dem Informationsträger eine digitale Straßenkarte aufgebracht ist mit weiteren Informationen zu besonderen Objekten, wobei den besonderen Objekten Positionen in der digitalen Straßenkarte zugeordnet sind, wobei die Informationen optisch ausgebbar sind, wobei zusätzlich zu dem Text auf dem Informationsträger Informationen zu den besonderen Objekten in Form von Bildern, Bilderfolgen, Filmen, Ton bzw. Musikdokumenten oder in Form von Mischungen mehrerer dieser Formen als Daten abgelegt sind, **dadurch gekennzeichnet, dass** den besonderen Objekten Adressen zum Abrufen weiterer und/oder aktualisierter Informationen per Funk zugeordnet und auf dem Informationsträger gespeichert sind.

2. Informationsträger nach Anspruch 1, **dadurch gekennzeichnet, dass** den Informationen zu den besonderen Objekten jeweils mindestens ein Oberbegriff zugeordnet ist.

3. Informationsträger nach einem der vorhergehenden Ansprüche, **dadurch gekennzeichnet, dass** die zusätzlichen Informationen zu den besonderen Objekten nach durch den Benutzer vorgebbaren Kriterien ausgebbar sind.

4. Informationsträger nach Anspruch 3, **dadurch gekennzeichnet, dass** die zusätzlichen Informationen in Abhängigkeit von der aktuellen Fahrzeugposition selbsttätig ausgebbar sind.

5. Informationsträger nach einem der vorherigen Ansprüche, **dadurch gekennzeichnet, dass** ebenfalls in Form von Bildern, Bilderfolgen, Filmen, Ton bzw. Musikdokumenten oder in Form von Mischungen mehrerer dieser Formen Informationen zur Bedienung des Kraftfahrzeugs und seiner Komponenten als Daten auf dem Informationsträger abgelegt sind.

6. Informationsträger nach Anspruch 5, **dadurch gekennzeichnet, dass** die Informationen zur Fahrzeugbedienung zur automatischen Ausgabe im Fall eines Fahrzeugdefekts auf dem Informationsträger abgelegt sind.
